Europäisches Patentamt

European Patent Office

Office européen des brevets

(19)

(11) Numéro de publication: **0 256 919 B1**

(12)

# FASCICULE DE BREVET EUROPEEN

(45) Date de publication de fascicule du brevet:
24.04.91

(51) Int. Cl.⁵: **F16B 5/02**

(21) Numéro de dépôt: 87401758.5

(22) Date de dépôt: 28.07.87

(54) **Dispositif de vissage utilisant une vis autotaraudeuse.**

(30) Priorité: 01.08.86 FR 8611202

(43) Date de publication de la demande:
24.02.88 Bulletin 88/08

(45) Mention de la délivrance du brevet:
24.04.91 Bulletin 91/17

(84) Etats contractants désignés:
DE IT

(56) Documents cités:
FR-A- 2 113 411
US-A- 2 356 934
US-A- 3 106 994
US-A- 4 116 510
US-A- 4 342 524

(73) Titulaire: SOCIETE ELECTRONIQUE DE LA RE-
GION PAYS DE LOIRE
74, rue du Surmelin
F-75020 Paris(FR)

(72) Inventeur: Huerre, Dominique
THOMSON-CSF SCPI 19, avenue de Messine
F-75008 Paris(FR)
Inventeur: Gate, Hubert
THOMSON-CSF SCPI 19, avenue de Messine
F-75008 Paris(FR)

(74) Mandataire: Chaverneff, Vladimir et al
THOMSON-CSF SCPI
F-92045 PARIS LA DEFENSE CEDEX 67(FR)

## Description

## DISPOSITIF DE VISSAGE UTILISANT UNE VIS AUTOTARAUDEUSE

La présente invention se rapporte à un dispositif de visage utilisant une vis autotaraudeuse.

Pour visser à l'aide d'une vis autotaraudeuse (vis "Parker") une pièce quelconque sur une paroi en matière synthétique de faible épaisseur, on réalise sur cette paroi un bossage comportant un trou lisse qui sera taraudé par la vis.

Un tel dispositif de vissage nécessite un bon alignement du trou de la pièce à visser et du trou du bossage, ainsi qu'un bon positionnement de la vis, dans l'axe commun à ces deux trous. En outre, la réalisation du bossage par moulage nécessite un démoulage selon l'axe du bossage.

On connaît d'après les documents US-A-3 106 994 et US-A-4 116 510 des dispositifs de vissage à vis autotaraudeuse, mais de tels dispositifs nécessitent un bon alignement de l'axe de la vis avec l'axe de la pièce dans laquelle elle est vissée.

La présente invention a pour objet un dispositif de vissage, utilisant une vis autotaraudeuse pour visser une pièce quelconque sur une paroi, en particulier une paroi en matière synthétique de faible épaisseur, qui permette de réaliser un bon vissage même en cas de mauvais alignement de la pièce et de la cloison, et même si la vis est engagée de travers, et ce, sans compliquer le moulage de la paroi.

Le dispositif de vissage conforme à l'invention comporte, la vis, la paroi, deux petites cloisons planes formées sur la paroi, parallèles entre elles, et orthogonales par rapport à la paroi, leur distance mutuelle étant sensiblement égale au diamètre à fond de filet de la vis, ces deux petites parois étant équidistantes par rapport à l'axe que doit occuper en fin de vissage l'axe de la vis, la distance de l'axe de la vis en position correctement vissée à la face la plus proche de la paroi étant au moins égale au rayon à fond de filet de la vis, la distance de l'axe de la vis au plan des faces frontales des cloisons, faces frontales les plus éloignées de la paroi (4), étant au moins égale à la moitié de la longueur de la vis, et la longueur des cloisons étant au moins égale à la longueur de la vis.

La présente invention sera mieux comprise à la lecture de la description détaillée d'un mode de réalisation, pris comme exemple non limitatif, et illustré par le dessin annexé, sur lequel :

- la figure 1 est une vue simplifiée, en perspective, d'un dispositif de vissage de l'art antérieur,
- la figure 2 est une vue simplifiée, en perspective, d'un dispositif de vissage conforme à l'invention, et

- les figures 3 à 5 sont des vues en perspective du dispositif de la figure 2 à différents stades du vissage.

Le dispositif décrit ci-dessous est utilisé pour fixer par vissage des pièces quelconques (composants électriques, pièces mécaniques...) sur des parois de faible épaisseur (coffrets, boîtiers, façades d'appareils...) en matière synthétique telle que de la matière plastique.

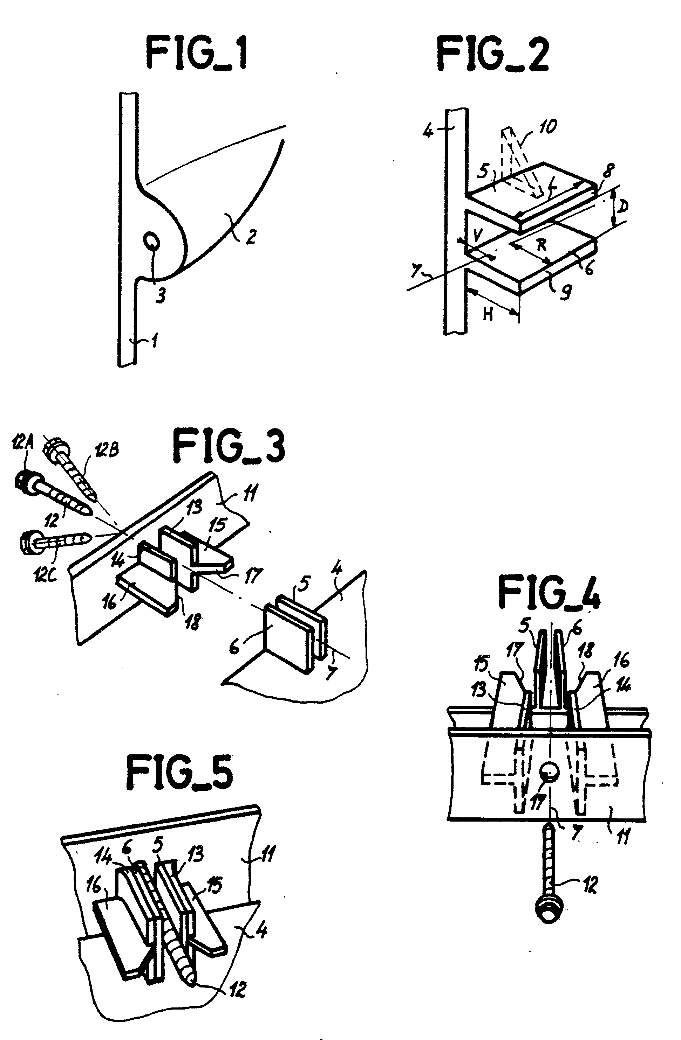

On a représenté sur la figure 1 un dispositif de l'art antérieur, pour lequel on moulait en surépaisseur sur la paroi 1 un bossage 2 de forme oblongue comportant un trou lisse 3 dans lequel on vissait une vis autotaraudeuse. Un tel dispositif présente les inconvénients cités ci-dessus en préambule.

Selon la présente invention, on moule sur une paroi 4 deux petites cloisons identiques de faible épaisseur 5, 6 parallèles entre elles et orthogonales par rapport à la paroi 4. La distance D entre les faces en regard des cloisons 5, 6 est sensiblement égale au diamètre à fond de filet de la vis utilisée qui est du type à collerette. L'axe 7 de la vis utilisée, en position correctement vissée de cette dernière, est à une distance V de la face la plus proche de la paroi 4. Cette distance V doit au moins être égale au rayon à fond de filet de la vis utilisée. La distance R entre l'axe 7 et le plan des faces supérieures 8, 9 (les plus éloignées de la paroi 4) des cloisons 5, 6 respectivement est au moins égale à la moitié de la longueur de la vis utilisée, ce qui fait que la hauteur H (mesurée perpendiculairement à la paroi 4) des cloisons 5, 6 est égale à V + R. La longueur L des cloisons 5, 6 (mesurée parallèlement à l'axe 7) est au moins égale à la longueur de la vis utilisée. L'épaisseur des cloisons 5, 6 si elles sont en matière plastique thermodurcissable, est d'environ 3 à 5 mm pour des vis utilisés d'un diamètre nominal de 3 à 7 mm. Le cas échéant, les cloisons 5, 6 peuvent être renforcées par des nervures qui leur sont orthogonales, telles que la nervure 10 représentée en trait interrompu sur la figure 2.

Dans l'exemple de réalisation représenté sur les figures 3 à 5, on soit visser une pièce 11 contre la paroi 4, cette pièce 11 étant simplement, dans le cas présent, une plaque. La vis 12 utilisée est une vis autotaraudeuse comportant, sous sa tête, une collerette intégrée 12A. Pour bien guider la pièce 11 par rapport à la paroi 4 et bien maintenir les cloisons 5, 6 lors du vissage et après, on dispose sur la pièce 11, soit par moulage intégral si cette pièce 11 est moulée, soit à l'aide d'un dispositif de fixation approprié, des éléments de paroi 13 à 16. Les éléments 13 et 14 sont rectangulaires, plans et parallèles entre eux. Leur distance est sensiblement égale à la distance entre grandes faces non en regard des cloisons 5, 6, et leurs dimensions sont sensiblement les mêmes que celles des cloisons 5, 6 ou légèrement plus grandes. Ces éléments 13, 14 sont disposés symétriquement par rapport à l'axe du trou 17 pratiqué dans la pièce 11 pour le passage de la vis 12, de façon à être légèrement au-dessus du plan de la paroi 4 sur lequel les cloisons 5, 6 sont en saillie. Bien entendu, l'axe de ce trou 17 doit être confondu avec l'axe 7 lorsque la pièce 11 est dans sa position correcte de fixation par rapport à la paroi 4. Les éléments de paroi 13, 14 doivent alors enserrer les cloisons 5, 6.

Pour bien maintenir et rigidifier les éléments 13, 14 on leur adjoint des nervures 15, 16 s'étendant perpendiculairement à la pièce 11 et aux faces non en regard de ces éléments 13, 14, sensiblement au niveau de l'axe du trou 17. Si la pièce 11 est en matière moulée, ces nervures 15, 16 sont moulées intégralement avec elle et avec les éléments 13, 14, sinon les éléments 13, 15 d'une part et les éléments 14, 16 d'autre part, qui sont identiques, sont moulés intégralement puis fixés de façon appropriée sur la pièce 11. Les éléments 15, 16 sont de forme générale rectangulaire et sont sensiblement de même largeur que les éléments 13, 14, mais légèrement plus longs (selon une direction parallèle à l'axe du trou 17) que les éléments 13, 14, et leurs coins en regard sont coupés en biais et forment des chanfreins 17, 18 qui arrivent au ras des faces en regard des éléments 13, 14. Ainsi, lorsque la pièce 11 est présentée face à la paroi 4, l'axe du trou 7 étant au moins approximativement aligné avec l'axe 7 (figure 3), et que l'on rapproche la pièce 11 de la paroi 4, l'ouverture évasée présentée par les chanfreins 17, 18 engage correctement les cloisons 5, 6 entre les parois 13, 14 (figure 4). La pièce 11 étant en place, au contact de la paroi 4, on visse la vis 12. On a constaté, après de nombreux essais que même si la vis 12 est présentée de biais (voir positions 12B, 12C de la vis sur la figure 3), (dans un plan passant par l'axe 7 et sensiblement parallèle aux cloisons 5, 6), et que le début du vissage se fait toujours de biais, cette vis se redresse en fin de vissage grâce à l'action de la collerette 12A qui tend à se mettre parallèle à la face de la pièce 11 sur laquelle elle s'appuie : la vis 12 "roule" entre les cloisons 5, 6 et s'aligne avec l'axe 7. Même lorsque la vis 12 a été présentée de biais, on obtient un bon serrage, presque aussi bon qu'avec le dispositif de la figure 1, ce qui suffit largement dans un grand nombre de cas.

En cas de réalisation par moulage en matière plastique, les cloisons 5, 6 sont très faciles à réaliser, et il en est de même des éléments 13 à 16. La vis 12 n'ayant pas besoin d'être présentée rigoureusement selon l'axe 7, le vissage peut être facilement réalisé aussi bien à la main qu'avec un automate.

Bien entendu, si les cloisons 5, 6 sont suffisamment rigides, et si le guidage de la pièce 11 par rapport à la paroi 4 peut être réalisé par d'autres moyens, on peut se passer des éléments 13 à 16. En outre, si l'on est sûr que la vis sera toujours bien présentée selon l'axe 7, on peut utiliser un modèle sans collerette.

**Revendications**

1. Dispositif de vissage comportant une paroi et une vis autotaraudeuse (12), pour visser une pièce quelconque (11) sur la paroi (4), caractérisé par le fait que la paroi comporte deux petites cloisons (5,6) planes formées sur la paroi, parallèles entre elles et orthogonales par rapport à la paroi, leur distance mutuelle (D) étant sensiblement égale au diamètre à fond de filet de la vis, ces deux petites cloisons étant équidistantes par rapport à l'axe (7) que doit occuper en fin de vissage l'axe de la vis, la distance (V) de l'axe (7) de la vis en position correctement vissée à la face la plus proche de la paroi étant au moins égale au rayon à fond de filet de la vis, la distance (R) de l'axe de la vis au plan des faces frontales (8,9) des cloisons, faces frontales les plus éloignées de la paroi (4), étant au moins égale à la moitié de la longueur de la vis, et la longueur (L) des cloisons étant au moins égale à la longueur de la vis.

2. Dispositif de vissage selon la revendication 1, caractérisé par le fait que la vis est du type à collerette (12A).

3. Dispositif selon l'une des revendications 1 ou 2, caractérisé par le fait que la pièce à visser (11) comporte des éléments (13 à 16) permettant de rigidifier les deux petites cloisons en les enserrant.

4. Dispositif selon la revendication 3, caractérisé par le fait que lesdits éléments comportent une ouverture évasée (17,18) pour le guidage de la pièce à visser (11) par rapport auxdites petites cloisons.

5. Dispositif selon l'une des revendications 1 ou 2, caractérisé par le fait qu'il comporte des nervures (10) de rigidification des petites cloisons.

6. Appareil caractérisé par le fait qu'il comporte au moins un dispositif de vissage selon l'une quelconque des revendications précédentes.

## Claims

1. A screwing device comprising a wall and a self-tapping screw (12) for fastening any component (11) on said wall (4), characterized in that the wall comprises two small and plane partitions (5, 6) formed on said wall, said partitions being parallel to each other and perpendicular with respect to the wall, their mutual distance (D) being substantially equal to the core diameter of the screw thread, these two small partitions being equidistant with respect to the axis (7) which the screw is intended to occupy at the end of the screwing operation, the distance (V) between the axis (7) of the screw in its final position and the closest side of the wall being at least equal to the core radius of the screw thread, the distance (R) between the axis of the screw and the plane of the frontal partition surfaces (8, 9) remotest from the wall (4) being at least equal to half the length of the screw, and the length (L) of the partitions being at least equal to the length of the screw.

2. A screwing device according to claim 1, characterized in that the screw is of the type having a collar (12A).

3. A device according to one of claims 1 or 2, characterized in that the component (11) to be fastened comprises members (13 to 16) allowing the two small partitions to be rigidified by being chucked therebetween.

4. A device according to claim 3, characterized in that said elements comprise a splayed opening (17, 18) intended to guide the component to be fastened (11) with respect to said small partitions.

5. A device according to one of claims 1 or 2, characterized in that it comprises ribs (10) intended to rigidify the small partitions.

6. An apparatus, characterized in that it comprises at least one screwing device according to any one of the preceding claims.

## Ansprüche

1. Verschraubvorrichtung mit einer Wand und einer selbstschneidenden Schraube (12), um ein beliebiges Bauteil (11) an die Wand (4) anzuschrauben, dadurch gekennzeichnet, daß die Wand zwei kurze ebene Wandstücke (5, 6) aufweist, die an der Wand angeformt sind, zueinander parallel verlaufen und senkrecht bezüglich der Wand angeordnet sind, wobei ihr gegenseitiger Abstand (D) im wesentlichen dem Kerndurchmesser des Gewindes der Schraube gleicht und die beiden kurzen Wandstücke gleiche Abstände zu der Achse (7) besitzen, die die Schraube am Ende des Schraubvorgangs einnehmen soll, und wobei der Abstand (V) zwischen der Achse (7) der Schraube in ihrer korrekten Endstellung und der nächstliegenden Seite der Wand dem Kernradius des Gewindes der Schraube zumindest gleichkommt und der Abstand (R) zwischen der Achse der Schraube und der Ebene der jeweiligen Stirnseiten (8, 9) der Wandstük-ke, die von der Wand (4) am weitesten entfernt liegen, mindestens der Hälfte der Länge der Schraube entspricht, während die Länge (L) der Wandstücke mindestens der Länge der Schraube gleichkommt.

2. Verschraubungsvorrichtung nach Anspruch 1, dadurch gekennzeichnet, daß die Schraube einen Kragen (12A) aufweist.

3. Vorrichtung nach einem der Ansprüche 1 oder 2, dadurch gekennzeichnet, daß das anzuschraubende Bauteil (11) Elemente (13 bis 16) aufweist, mit denen die beiden kurzen Wandstücke versteift werden können, indem sie sie zwischen sich einspannen.

4. Vorrichtung nach Anspruch 3, dadurch gekennzeichnet, daß diese Elemente eine sich verengende Öffnung (17, 18) zur Führung des zu verschraubenden Bauteils (11) bezüglich der kurzen Wandstücke besitzen.

5. Vorrichtung nach einem der Ansprüche 1 oder 2, dadurch gekennzeichnet, daß sie Rippen (10) zur Versteifung der kurzen Wandstücke aufweist.

6. Gerät, dadurch gekennzeichnet, daß es mindestens eine Verschraubungsvorrichtung nach einem beliebigen der vorhergehenden Ansprüche enthält.

# FIG_1

# FIG_2

# FIG_3

# FIG_4

# FIG_5